# EUROPEAN PATENT APPLICATION

(11) **EP 2 605 381 A2**
(43) Date of publication of application: **19.06.2013**
(21) Application number: 12196178.3
(22) Date of filing: 07.12.2012
(51) Int. Cl.: H02K 9/19, H02K 5/20

(54) **Electric machine module cooling system and method**

(30) Priority: 08.12.2011 US 201161568429 P; 06.12.2012 US 201213706629
(71) Applicant: Remy Technologies, LLC, Pendleton, IN 46064 (US)
(72) Inventor: Burger, Clemens, Pendleton, IN 46064 (US); Obras, Matthew, Pendleton, IN 46064 (US)
(74) Representative: Roberts, Peter David

(57) **Abstract**

Some embodiments of the invention provide an electric machine module. The module can include a housing, which can define a machine cavity. In some embodiments, a coolant jacket can be at least partially positioned within the housing. Some embodiments include a sleeve member at least partially surrounding the coolant jacket. In some embodiments, a stator assembly including stator end turns can be at least partially disposed within the housing and can be at least partially circumferentially surrounded by the coolant jacket. Some embodiments provide at least one coolant apertures being in fluid communication with the coolant jacket. Some embodiments can include at least one end turn cavity at least partially surrounding a stator end turn and fluidly coupled to the coolant jacket via at least one coolant aperture. In some embodiments, the at least one end turn cavity is in fluid communication with the coolant jacket and the machine cavity.

## Description

### BACKGROUND

Electric machines, often contained within a machine cavity of a housing, generally include a stator assembly and a rotor assembly. For some electric machines, the stator assembly can be secured to the housing using different coupling techniques to generally secure the electric machine within the housing. During operation of some electric machines, heat energy can be generated by the stator assembly and the rotor assembly, as well as some other components of the electric machine. The increase in heat energy produced by some elements of the electric machine can lead to inefficient machine operations.

### SUMMARY

Some embodiments of the invention provide an electric machine module. The module can include a housing, which can define a machine cavity. In some embodiments, a coolant jacket can be at least partially positioned within the housing. In some embodiments, a plurality of coolant apertures can be disposed through at least a portion of the housing to fluidly couple the coolant jacket and the machine cavity. In some embodiments, a stator assembly including stator end turns can be at least partially disposed within the housing and positioned radially adjacent to the coolant apertures. In some embodiments, the coolant jacket can be in fluid communication with the machine cavity. In some embodiments, at least a portion of the coolant apertures can be fluidly coupled with the coolant jacket which is in fluid communication with the coolant jacket, the stator end turns, and the machine cavity.

Some embodiments of the invention provide an electric machine module including a rotor and a stator comprising a stator core including first axial end and a second axial end. In some embodiments, a housing enclosing the electric machine within a machine cavity includes at least one end cap positioned axially adjacent to the electric machine. In some embodiments, the electric machine module includes a sleeve member disposed within the housing, generally circumscribing the electric machine. In some embodiments, a coolant jacket can be generally formed within the sleeve member. In some embodiments, coolant apertures can fluidly couple to the coolant jacket. Some embodiments include coolant apertures that are positioned substantially radially adjacent to the stator end turns, and are substantially radially aligned to an axial end of a stator end turn and the first axial end of the stator core. In some embodiments, coolant apertures are provided that are positioned between an axial end of a stator end turn and the second axial end of the stator core. Some embodiments include a coolant aperture where the outer circumference of an exit of the coolant aperture is substantially radially perpendicular to a radial axis of the rotor.

Some embodiments of the invention include at least one stator end turn cavity. In some embodiments, the at least one stator end turn cavity can at least partially surround a stator end turn. In some embodiments, the coolant jacket can be configured and arranged to contain a liquid coolant and disperse the liquid coolant from the coolant jacket, through the coolant apertures into a stator end turn cavity, onto one or more stator end turns, or into the machine cavity.

Some embodiments of the electric machine include a coolant jacket that is configured and arranged to contain a pressurized liquid coolant. In other embodiments, the coolant jacket and the coolant apertures are configured and arranged to circulate the liquid coolant substantially under gravity flow. In some embodiments, one or more end turn cavities can be substantially or completely sealed relative to the machine cavity, and any liquid coolant circulating through the one or more of the end turn cavities remains substantially in the end turn cavities. In other embodiments, a portion of the fluid can exit the end turn cavities and enter the machine cavity.

In some embodiments, one or more stator end turn cavities can substantially or completely surround one or more a stator end turns. In some embodiments, one of at least two end turn cavities substantially or completely surrounds a stator end turn. In some other embodiments, at least two end turn cavities surround substantially similar proportions of a stator end turn. In some further embodiments, at least two end turn cavities surround substantially different proportions of a stator end turn.

In some embodiments, one or more of the stator end turn cavities comprises at least three flanges. In some embodiments, the three flanges are integrally formed as a substantially monolithic structure. In some embodiments, the flanges are coupled to the stator core, the end turns, or the housing. Some embodiments include flanges that are substantially non-electrically conductive.

Some embodiments of the invention include a method for assembling an electric machine module. The method can include providing the electric machine including a rotor, a stator circumscribing the rotor, providing a housing enclosing the electric machine within a machine cavity and including at least one end cap positioned axially adjacent to the electric machine, providing a sleeve member disposed within the housing and generally circumscribing the electric machine and coupled to the at least one end cap. In some embodiments, the method can include providing a coolant jacket generally formed within the sleeve member that is configured and arranged to contain a liquid coolant. In some embodiments, coolant apertures can be positioned substantially radially adjacent to the stator end turns and radially aligned to an axial end of a stator end turn and a first axial end of the stator core. In some further embodiments of the method, coolant apertures can be provided that are positioned between an axial end of a stator end turn and a second axial end of the stator core. Some embodiments provide a method to disperse a portion of the liquid coolant from the coolant jacket substantially into at least one stator end turn cavity. In some further embodiments, a method is provided to disperse a portion of the liquid coolant from the coolant jacket substantially onto a stator end turn. Some other embodiments provide a method to disperse a portion of the liquid coolant from the coolant jacket substantially into the machine cavity.

According to an aspect of the invention there is provided an electric machine module comprising: an electric machine including a rotor; a stator comprising a stator core including a first axial end and a second axial end, and stator end turns; a housing enclosing the electric machine within a machine cavity and including at least one end cap positioned axially adjacent to the electric machine; a sleeve member disposed within the housing and at least partially circumscribing the electric machine and coupled to the at least one end cap; at least one stator end turn cavity at least partially surrounding a stator end turn; a coolant jacket disposed within the sleeve member and configured and arranged to contain a liquid coolant, the sleeve member including at least one coolant apertures fluidly coupled with the coolant jacket and the at least one stator end turn cavity, the at least one coolant apertures positioned substantially between an axial end of a stator and an axial end of a substantially adjacent stator end turn; and wherein the at least one coolant apertures are configured and arranged to disperse a portion of the liquid coolant from the coolant jacket substantially into the at least one stator end turn cavity.

The outer circumference of an outlet of the at least one coolant apertures may be substantially parallel to the rotational axis of the rotor.

The at least one coolant apertures may be in fluid communication with the coolant jacket and may be configured and arranged to disperse a portion of the liquid coolant from the coolant jacket substantially towards the stator end turns.

The at least one coolant apertures may be configured and arranged to disperse a portion of the liquid coolant from the coolant jacket substantially into the machine cavity.

The coolant jacket may be configured and arranged to contain a pressurized liquid coolant.

The coolant jacket and the at least one coolant apertures may be configured and arranged disperse the liquid coolant substantially under gravity flow.

The coolant jacket and the at least one coolant apertures may be configured and arranged disperse pressurized liquid coolant.

The electric machine module may comprise at least two end turn cavities wherein the at least one coolant apertures are configured and arranged to disperse a portion of the liquid coolant from the coolant jacket substantially into the at least two stator end turn cavities.

The at least one coolant apertures may be configured and arranged to disperse a portion of the liquid coolant from the coolant jacket substantially towards the stator end turns.

The at least one end turn cavities may be substantially sealed relative to the machine cavity; and the at least one end turn cavities may be configured and arranged so that any liquid coolant circulating through the at least one end turn cavities remains substantially in the end turn cavities.

Optionally, at least some portion of the fluid can exit the end turn cavities and enter the machine cavity.

The at least one stator end turn cavity may substantially surround a stator end turn.

One of the at least two end turn cavities may substantially surround a stator end turn.

The at least two end turn cavities may surround substantially similar proportions of a stator end turn.

The at least two end turn cavities may surround substantially different proportions of a stator end turn.

The at least one stator end turn cavity may comprise at least three flanges.

The at least three flanges may be integrally formed as a substantially monolithic structure.

The at least three flanges may be substantially non-electrically conductive.

The at least three flanges may be coupled to at least one of the stator core, the end turns, and the housing.

According to an aspect of the invention there is provided a method for assembling an electric machine module comprising: providing the electric machine including a rotor and a stator circumscribing the rotor, the stator a stator comprising a stator core including first axial end and a second axial end, and stator end turns; providing a housing enclosing the electric machine within a machine cavity and including at least one end cap positioned axially adjacent to the electric machine; providing a sleeve member disposed within the housing and generally circumscribing the electric machine and coupled to the at least one end cap; providing a coolant jacket disposed within the sleeve member and configured and arranged to contain a liquid coolant, the sleeve member including at least one coolant apertures fluidly coupled with the coolant jacket and the at least one stator end turn cavity, the at least one coolant apertures positioned substantially between an axial end of a stator and an axial end of an adjacent stator end turn; and providing at least one stator end turn cavity at least partially surrounding a stator end turn; and configuring the at least one coolant apertures to be in fluid communication with the coolant jacket and the at least one stator end turn cavity; and configuring the at least one coolant apertures to disperse a portion of the liquid coolant from the coolant jacket substantially into the at least one stator end turn cavity.

### DESCRIPTION OF THE DRAWINGS

FIG. 1 is a cross-sectional view of an electric machine module according to one embodiment of the invention.
FIG. 2 is a partial cross-sectional view of an electric machine module according to one embodiment of the invention.
FIG. 3 is a perspective view of a stator assembly according to one embodiment of the invention.
FIG. 4 is front view of a stator lamination according to one embodiment of the invention.
FIG. 5 is a perspective view of a conductor according to one embodiment of the invention.
FIG. 6 is a partial cross-sectional view of portions of an electric machine module according to one embodiment of the invention.
FIGS. 7A and 7B are partial cross-sectional views of an electric machine module according to some embodiments of the invention.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives that fall within the scope of embodiments of the invention.

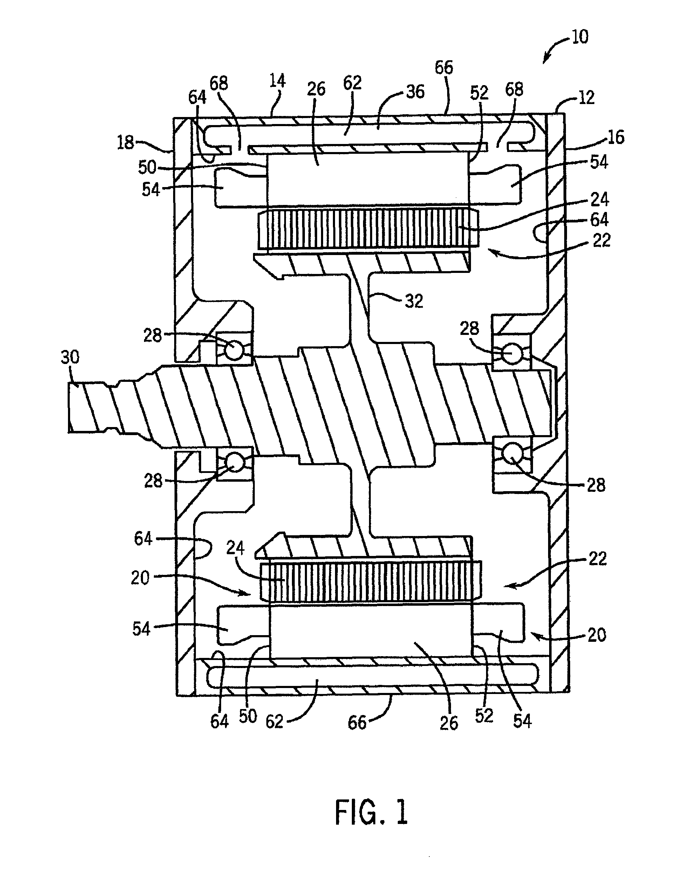

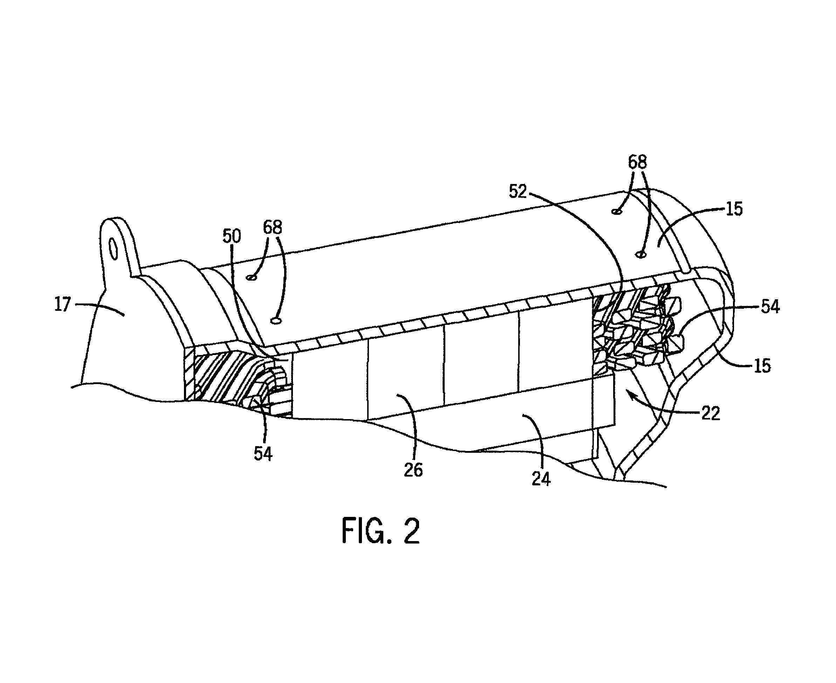

FIGS. 1 and 2 illustrate an electric machine module 10 according to one embodiment of the invention. The module 10 can include a housing 12 comprising a sleeve member 14, a first end cap 16, and a second end cap 18. An electric machine 20 can be housed within a machine cavity 22 at least partially defined by the sleeve member 14 and the end caps 16, 18. For example, the sleeve member 14 and the end caps 16, 18 can be coupled via conventional fasteners (not shown), or another suitable coupling method, to enclose at least a portion of the electric machine 20 within the machine cavity 22. In some embodiments, the housing 12 can comprise a substantially cylindrical canister 15 coupled to an end cap 17, as shown in FIG. 2. Further, in some embodiments, the housing 12, including the sleeve member 14 and the end caps 16, 18, can comprise materials that can generally include thermally conductive properties, such as, but not limited to aluminum or other metals and materials capable of generally withstanding operating temperatures of the electric machine. In some embodiments, the housing 12 can be fabricated using different methods including casting, molding, extruding, and other similar manufacturing methods.

The electric machine 20 can include a rotor assembly 24, a stator assembly 26, and bearings 28, and can be disposed about a shaft 30. As shown in FIG. 1, the stator assembly 26 can substantially circumscribe at least a portion of the rotor assembly 24. In some embodiments, the rotor assembly 24 can also include a rotor hub 32 or can have a "hub-less" design (not shown).

In some embodiments, the electric machine 20 can be coupled to the housing 12. For example, the electric machine 20 can be fitted within the housing 12. In some embodiments, the electric machine 20 can be fitted within the housing 12 using an interference fit, a shrink fit, other similar friction-based fits that can at least partially couple the machine 20 and the housing 12. For example, in some embodiments, the stator assembly 26 can be shrunk fit into the module housing 12. Further, in some embodiments, the fit can at least partially secure the stator assembly 26, and as a result, the electric machine 20, in axial, radial and circumferential directions. In some embodiments, during operation of the electric machine 20 the fit between the stator assembly 26 and the housing 12 can at least partially serve to transfer torque from the stator assembly 26 to the housing 12. In some embodiments, the fit can result in a generally greater amount of torque retained by the module 10.

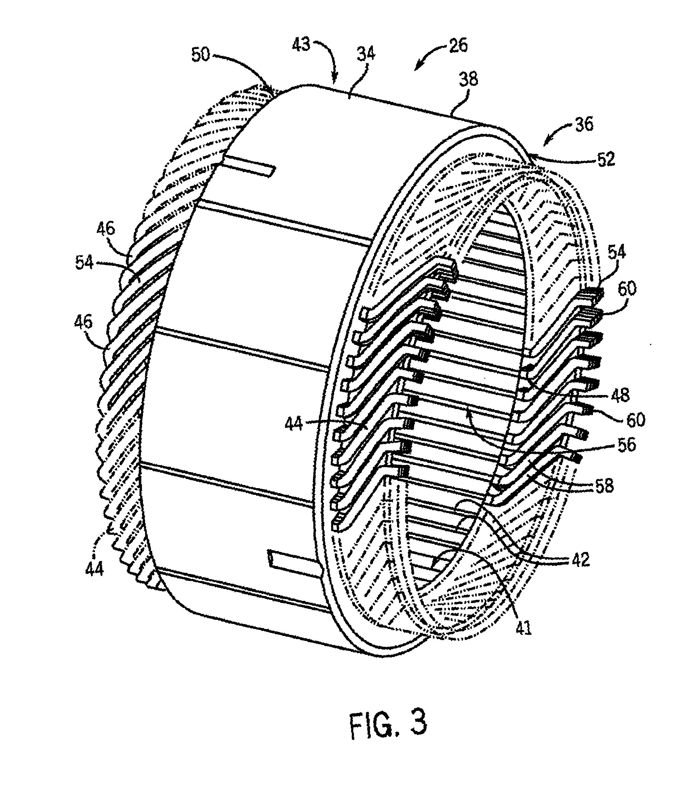

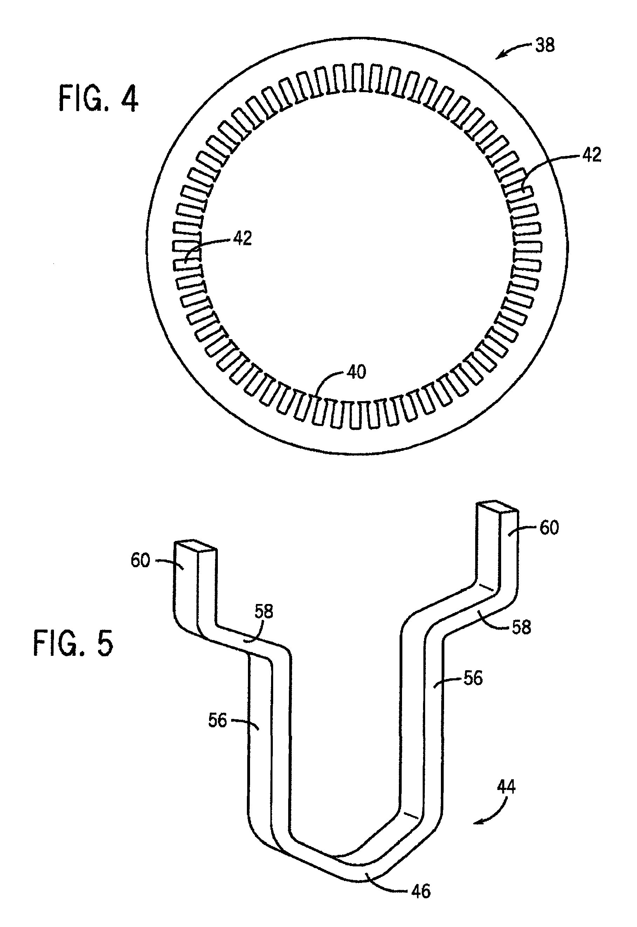

As shown in FIG. 3, in some embodiments, the stator assembly 26 can comprise a stator core 34 and a stator winding 36 at least partially disposed within a portion of the stator core 34. For example, in some embodiments, the stator core 34 can comprise a plurality of laminations 38. Referring to FIG. 4, in some embodiments, the laminations 38 can comprise a plurality of substantially radially-oriented teeth 40. In some embodiments, as shown in FIG. 3, when at least a portion of the plurality of laminations 38 are substantially assembled, the teeth 40 can substantially align to define a plurality of slots 42 that are configured and arranged to support at least a portion of the stator winding 36. As shown in FIG. 4, in some embodiments, the laminations 38 can include sixty teeth 40, and, as a result, the stator core 28 can include sixty slots 42. In other embodiments, the laminations 38 can include more or fewer teeth 40, and, accordingly, the stator core 34 can include more or fewer slots 42. Moreover, in some embodiments, the stator core 34 can comprise an inner perimeter 41 and an outer perimeter 43. For example, in some embodiments, the stator core 34 can comprise a substantially cylindrical configuration so that the inner and outer perimeters 41, 43 can comprise inner and outer diameters, respectively. However, in other embodiments, the stator core 34 can comprise other configurations (e.g., square, rectangular, elliptical, regular or irregular polygonal, etc.), and, as a result, the inner and outer perimeters 41, 43 can comprise other dimensions.

In some embodiments, the stator winding 36 can comprise a plurality of conductors 44. In some embodiments, the conductors 44 can comprise a substantially segmented configuration (e.g., a hairpin configuration), as shown in FIGS. 3 and 5. For example, in some embodiments, at least a portion of the conductors 44 can include a turn portion 46 and at least two leg portions 48. In some embodiments, the turn portion 46 can be disposed between the two leg portions 48 to substantially connect the two leg portions 48. In some embodiments, the leg portions 48 can be substantially parallel. Moreover, in some embodiments, the turn portion 46 can comprise a substantially "u-shaped" configuration, although, in some embodiments, the turn portion 46 can comprise a v-shape, a wave shape, a curved shape, and other shapes. Additionally, in some embodiments, as shown in FIG. 5, at least a portion of the conductors 44 can comprise a substantially rectangular cross section. In some embodiments, at least a portion of the conductors 44 can comprise other cross-sectional shapes, such as substantially circular, square, hemispherical, regular or irregular polygonal, etc. In some embodiments, the conductors 44 can comprise other configurations (e.g., substantially non-segmented configuration).

In some embodiments, as shown in FIG. 3, at least a portion of the conductors 44 can be positioned substantially within the slots 42. For example, in some embodiments, the stator core 34 can be configured so that the plurality of slots 42 are substantially axially arranged. In some embodiments, the leg portions 48 can be inserted into the slots 42 so that at least some of the leg portions 48 can axially extend through the stator core 34. In some embodiments, the leg portions 48 can be inserted into neighboring slots 42. For example, in some embodiments, the leg portions 48 of a conductor 44 can be disposed in slots that are distanced approximately one magnetic-pole pitch apart (e.g., six slots, eight slots, etc.). In some embodiments, a plurality of conductors 44 can be disposed in the stator core 34 so that at least some of the turn portions 46 of the conductors 44 axially extend from the stator core 34 at a first axial end 50 of the stator core 34 and at least some of the leg portions 48 axially extend from the stator core 34 at a second axial end 52 of the stator core 34. In some embodiments, at least a portion of the conductor 44 regions that axially extend from the core 34 at the axial ends 50, 52 can comprise stator end turns 54.

In some embodiments, the conductors 44 can be generally fabricated from a substantially linear conductor 44 that can be configured and arranged to a shape substantially similar to the conductor in FIG. 5. For example, in some embodiments, a machine (not shown) can apply a force (e.g., bend, push, pull, other otherwise actuate) to at least a portion of a conductor 44 to substantially form the turn portion 46 and the leg portions 48 from a conductor 44.

In some embodiments, at least some of the leg portions 48 can comprise multiple regions. In some embodiments, the leg portions 48 can comprise in-slot portions 56, angled portions 58, and connection portions 60. In some embodiments, as previously mentioned, the leg portions 48 can be disposed in the slots 42 and can axially extend from the first end 50 to the second end 52. In some embodiments, after insertion, at least a portion of the leg portions 48 positioned within the slots 42 can comprise the in-slot portions 56.

In some embodiments, at least some of stator end turns 54 extending from stator core 34 at the second axial end 52 can comprise the angled portions 58 and the connection portions 60. In some embodiments, after inserting the conductors 44 into the stator core 34, the leg portions 48 extending from the stator core 34 at the second axial end 52 can undergo a twisting process (not shown) that can lead to the creation of the angled portions 58 and the connection portions 60. For example, in some embodiments, the twisting process can give rise to the angled portions 58 at a more axially inward position and the connection portions 60 at a more axially outward position, as shown in FIGS. 3 and 5. In some embodiments, after the twisting process, the connection portions 60 of at least a portion of the conductors 44 can be immediately adjacent to connection portions 60 of other conductors 44. As a result, the connection portions 60 can be coupled together to form one or more stator windings 36. In some embodiments, the connection portions 60 can be coupled via welding, brazing, soldering, melting, adhesives, or other coupling methods. Additionally, in some embodiments, the angled portions 58 and the connection portions 60 can extend from the first axial end 50 and can be configured and arranged in a similar manner as some previously mentioned embodiments.

In some embodiments, some components of the electric machine 20 such as, but not limited to, the rotor assembly 24, the stator assembly 26, and the stator end turns 54, can generate heat during operation of the electric machine 20. These components can be cooled to increase the performance and the lifespan of the electric machine 20.

In some embodiments, dissipation of heat energy at the stator end turns 54 can be insufficient to ensure efficient operations of the electric machine 20. For example, in some embodiments, heat energy can be produced by the stator end turns 54 as a result of current flowing through the end turns 54 during operation of the electric machine 20. Convection of the heat energy via air in the machine cavity 22 to the stator core 34 and/or the housing 12 can be substantially insufficient because air comprises relatively poor thermal conductivity properties. As a result, in some embodiments, because of insufficient convection of heat energy to the housing 12 and/or the stator core 34, the stator end turns 54 can exhibit relatively large copper losses, which can result in inefficient operation of the electric machine 20.

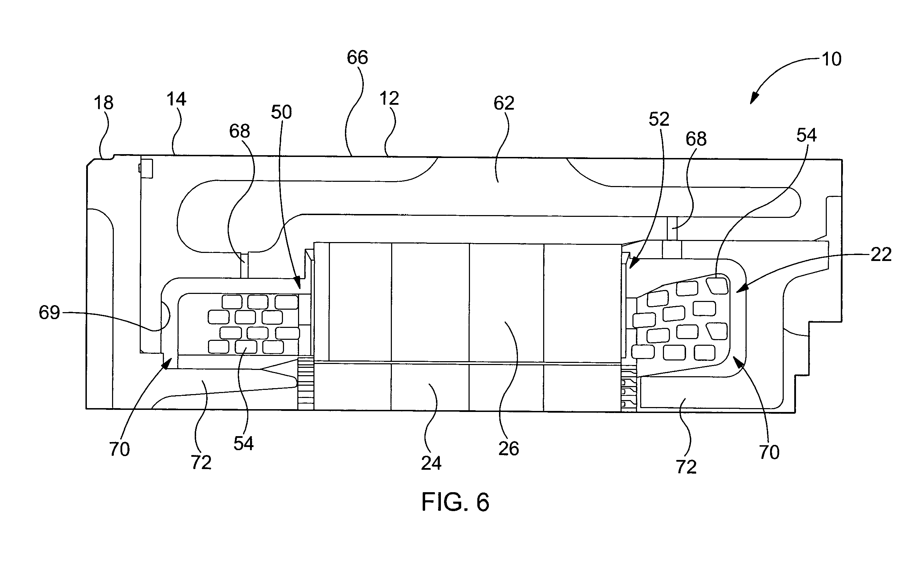

As shown in FIGS. 1 and 6, in some embodiments, the housing 12 can comprise a coolant jacket 62. In some embodiments, the housing 12 can include an inner wall 64 and an outer wall 66 and the coolant jacket 62 can be positioned substantially between at least a portion the walls 64, 66. For example, in some embodiments, the machine cavity 22 can be at least partially defined by the inner wall 64 (e.g., each of the elements of the housing 12 can comprise a portion of the inner wall 64). In some embodiments, the coolant jacket 62 can substantially circumscribe at least a portion of the electric machine 20. For example, in some embodiments, the coolant jacket 62 can substantially circumscribe at least a portion of the outer perimeter 43 of the stator assembly 26, including the stator end turns 54. In some embodiments, one or more coolant jackets 62 can be disposed and/or through other portions of the housing 12, in addition to or in lieu of the coolant jacket 62 disposed within the sleeve member 14. For example, in some embodiments, at least a portion of a coolant jacket 62 can be disposed through portions of the end caps 16, 17, 18 or the canister 15.

Further, in some embodiments, the coolant jacket 62 can contain a coolant that can comprise a liquid. In some embodiments, the coolant can comprise a liquid coolant that can at least partially wet one or more internal surfaces of the electric machine 10. In some embodiments, a liquid coolant can at least partially wet one or more internal surfaces (for example inner wall 64) of the coolant jacket 62. In some other embodiments, a liquid coolant can at least partially wet the internal surfaces of a coolant aperture 68. In some other embodiments, a liquid coolant can at least partially wet one or more internal surfaces of at least one end turn cavity 70. In some further embodiments, the electric machine 10 can be configured and arranged for a liquid coolant to wet the surface of one or more stator end turns. In some other embodiments, a liquid coolant can wet one or more surfaces of the machine cavity.

In some embodiments, the coolant can comprise a transmission fluid, ethylene glycol, an ethylene glycol / water mixture, water, or an oil, including, but not limited to a motor oil, a gear oil, synthetic oil or other hydrocarbon-based fluid. In some embodiments, the coolant may comprise a fluid such as a gas, a mist, or a similar substance. In some embodiments, the coolant jacket 62 can be in fluid communication with a coolant source (not shown) which can pressurize the coolant prior to or as it is being dispersed into the coolant jacket 62, so that the pressurized coolant can circulate through the coolant jacket 62.

In some embodiments, at least a portion of the housing 12 can comprise at least one coolant aperture 68. In some embodiments, the housing 12 can comprise a plurality of coolant apertures 68. In some embodiments, at least a portion of the coolant apertures 68 can be disposed through a portion of the housing 12 to fluidly connect the coolant jacket 62 and the machine cavity 22 and portions of the electric machine 20. For example, in some embodiments, at least a portion of the coolant apertures 68 can be disposed through a portion of the inner wall 64 of the housing 12 to fluidly connect the coolant jacket 62 with the machine cavity 22. Moreover, in some embodiments, as previously mentioned, at least a portion of coolant circulating through the coolant jacket 62 can be pressurized so that as coolant circulates through the coolant jacket 62, at least a portion of the coolant can pass through the coolant apertures 68 can enter the machine cavity 22. In some other embodiments, at least a portion of the coolant can pass through the coolant apertures 68 and enter the end turn cavity or the machine cavity under gravity flow.

In some embodiments, the electric machine module 10 can comprise configurations to facilitate cooling of some components of the electric machine. These components can be cooled to enhance the performance of, and increase the lifetime of the electric machine. In some embodiments, the electric machine module 10 can comprise configurations to facilitate cooling of at least the stator end turns. For example, in some embodiments, the electric machine module 10 can comprise at least one end turn cavity 70. In some embodiments, the module 10 can comprise at least two end turn cavities 70. For example, at least a portion of the end turns 54 extending from the first and the second axial ends 50, 52 can be at least partially disposed within the end turn cavities 70. In some embodiments, some or all of the end turns 54 can be disposed within the end turn cavities 70. In some embodiments of the invention, the end turn cavities 70 can be configured and arranged to contain a coolant. For example, in some embodiments, the end turn cavities 70 can be fluidly connected to the coolant jacket 62 via a coolant aperture 68. In some embodiments, the coolant can be substantially stagnant within the end turn cavities 70, whereas in other embodiments, the end turn cavities can be configured and arranged to enable coolant to flow through the end turn cavities. For example, in some embodiments, the end turn cavities 70 can be substantially or completely sealed relative to the machine cavity 22, as described in further detail below. For example, any fluid circulating through the end turn cavities 70 can either wholly remain within the cavities 70 or a portion of the fluid can exit the cavities 70 and enter the machine cavity 22.

In some embodiments, the end turn cavities 70 can comprise multiple configurations. For example, in some embodiments, a single end turn cavity 70 can circumferentially surround the stator end turns 54 at one or both of the first axial end 50 and the second axial end 52 (e.g., all of the stator end turns 54 can be disposed within the end turn cavities 70). In some embodiments, the end turn cavities 70 can be disposed around a lesser proportion of the stator end turns 54. For example, 10%, 20%, 50%, 75%, etc. of the stator end turns 54 extending from the stator core 34 can be disposed within the end turn cavities 70. Further, in some embodiments, the end turn cavities 70 can surround different portions of the stator end turns 54 at the first and second axial ends 50, 52. For example, on the first axial end 50, approximately 100% of the stator end turns 54 can be disposed within the end turn cavities 70 and on the second axial end 52, 75% of the stator end turns 54 can be disposed within the end turn cavities 70. In other embodiments, any proportion of the stator end turns 54 on either the first or the second axial ends 50, 52 of the stator assembly 26 can be housed within the end turn cavities 70 to meet manufacturer or user needs.

In some embodiments, the electric machine module 10 can comprise a plurality of flanges 72 that are configured and arranged to define the cavities 70. In some embodiments, the flanges 72 can be coupled to portions of the inner walls 64 and/or a portion of the stator assembly 26. For example, the flanges 72 can be coupled to the inner wall 64 of the housing 12 and extend axially inward so that when the stator assembly 26 is positioned within the machine cavity 22, at least a portion of the stator end turns 54 are disposed within the end turn cavities 70 (e.g., between the flanges 72).

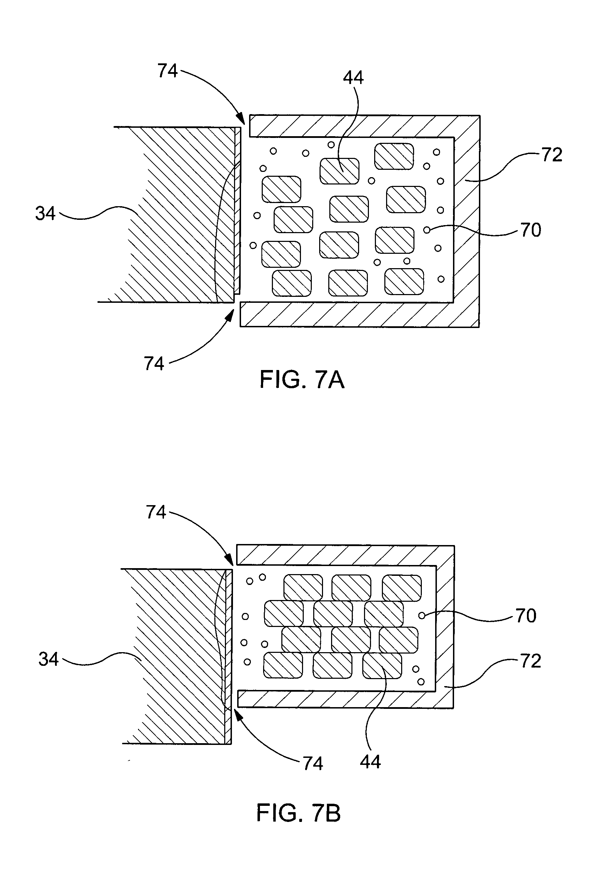

As shown in FIGS. 7A and 7B, in some embodiments, the cavities 70 can comprise at least three flanges 72 and can be coupled to at least one of the stator end turns 54 and the stator core 34. In some embodiments, the flanges 72 can be coupled together to define the end turn cavity 70. In other embodiments, the flanges 72 can be formed as one integral piece so that the individual flanges 72 need not be coupled together. In some embodiments, the flanges 72 can be coupled to the stator core 34 and/or the end turns 54 via brazing, welding, conventional fasteners, friction fitting, interference fitting, adhesives, any other conventional coupling technique, or any combination thereof. Moreover, in some embodiments, the flanges 72 can comprise a substantially non-electrically conductive material. An electric current circulates through the conductors 44 during electric machine 20 operations, and, in order to prevent short circuits and grounding events, any materials adjacent to the end turns 54, including the flanges 72 preferably comprise non-electrically conductive properties. Accordingly, the flanges 72 can be coupled to at least one of the stator core 34, the end turns 54, and the housing 12 to define the end turn cavities 70 substantially surrounding at least a portion of the stator end turns 54. In some embodiments, the flanges 72 can comprise a polymer. In other embodiments, the flanges 72 can comprise a non-electrically conductive composite. In some embodiments, the flanges 72 can be can comprise a non-electrically conductive coating.

In some embodiments, at least some of the coolant apertures 68 can fluidly couple the coolant jacket 62 to at least one of the end turn cavities 70. In some embodiments, at least a portion of the end turn cavities 70 can include at least one inlet (not shown) so that coolant can flow from the coolant apertures 68 into the end turn cavities 70. In some embodiments, coolant can flow from the coolant apertures 68 to the end turn cavities 70 via a substantially sealed structure (e.g., a hose, tube, or other structure capable of containing a portion of the flowing coolant). In some embodiments, coolant can flow from the coolant apertures 68, enter the machine cavity 22, and at least a portion of the coolant can passively enter at least some of the end turn cavities 70. In some embodiments, at least one outlet (not shown) can be disposed through a portion of the flanges 72 and can be fluidly coupled to a drain system (not shown) so that the at least a portion of the coolant within the end turn cavities 70 can flow to the drain system.

In some embodiments, the end turn cavities 70 can be substantially sealed relative to some portions of the module 10. For example, in some embodiments, at least some of the end turn cavities 70 can comprise a volume of coolant that is substantially similar to the maximum allowable volume of the cavities 70 (e.g., the cavities 70 are substantially or completely full of coolant). As a result, in some embodiments, each of the end turns 54 disposed within the end turn cavities 70 can be substantially surrounded by coolant circulating through the cavities 70 and can transfer at least a portion of the heat energy produced during operations of the electric machine module 10. As a result, the electric machine 20 can be at least partially cooled by the circulating coolant, which can lead to improved operations. Moreover, by containing at least a portion of the coolant exiting the coolant jacket 62 within the cavities 70, separation between the coolant and the heat-producing end turns 54 can be minimized or eliminated, which can result in improved cooling for the module 10. In some embodiments, the end turn cavities 70 can function without being substantially sealed. For example, the end turn cavities 70 can comprise a gap 74 between the flanges 72 and the stator core 34, as shown in FIGS. 7A and 7B. In some embodiments, the end turn cavities 70 can comprise a near maximum or maximum of volume of coolant even when not completely sealed because the rate of coolant circulation through the end turn cavities 70 can be increased to a great enough level to ensure sufficient levels of coolant within the cavities 70 (e.g., enough coolant present within the cavities 70 to contact multiple regions of the stator end turns 54). In some embodiments, the gap 74 can be present and can be substantially sealed by a sealing structure (e.g., a plug) (not shown).

Some embodiments of the invention provide improvements relative to some conventional cooling configurations. For example, some conventional electric machine modules 10 can comprise a coolant jacket 62 and coolant apertures 68 that direct coolant from the jacket 62 directly onto the stator end turns 54. This configuration can result in substantially uneven cooling. The coolant flow from the apertures 68 to the stator end turns 54 can be influenced by gravity, geometries of the conductors 44 (e.g., the shape of the conductors 44), air circulation within the machine cavity 22 caused by the spinning rotor assembly 24, and other potentially disruptive factors. As a result of some of these factors, the coolant flow from the coolant jacket 62 can be unintentionally redirected away from the stator end turns 54, which can create under-cooled regions and even some non-cooled regions of the conductors 44. As a result, conductor 44 hot spots and uneven temperature distributions can arise, which can lead to inefficient electric machine module 10 operations.

Some embodiments of the invention can improve at least a portion of the previously mentioned cooling issues. For example, factors creating difficulty in cooling (e.g., gravity, conductor geometry, and air circulation within the machine cavity 22) can be substantially avoided because coolant can be directly routed to the end turn cavities 70 and contact a greater proportion of the end turns 54 relative to some conventional configurations. Moreover, more surface area of the conductors 44 can be exposed to coolant, which can lead to improved heat energy transfer because the stator end turns 54 disposed within the end turn cavities 70 can be substantially or completely covered in circulating coolant. As a result, cooling of the electric machine module 10 can be improved, and accordingly, so can module 10 operations.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the invention.

## Claims

1. An electric machine module comprising:
an electric machine including a rotor;
a stator comprising a stator core including a first axial end and a second axial end, and stator end turns;
a housing enclosing the electric machine within a machine cavity and including at least one end cap positioned axially adjacent to the electric machine;
a sleeve member disposed within the housing and at least partially circumscribing the electric machine and coupled to the at least one end cap;
at least one stator end turn cavity at least partially surrounding a stator end turn;
a coolant jacket disposed within the sleeve member and configured and arranged to contain a liquid coolant, the sleeve member including at least one coolant apertures fluidly coupled with the coolant jacket and the at least one stator end turn cavity,
the at least one coolant apertures positioned substantially between an axial end of a stator and an axial end of a substantially adjacent stator end turn; and
wherein the at least one coolant apertures are configured and arranged to disperse a portion of the liquid coolant from the coolant jacket substantially into the at least one stator end turn cavity.

2. The electric machine module of claim 1, wherein the outer circumference of an outlet of the at least one coolant apertures is substantially parallel to the rotational axis of the rotor.

3. The electric machine module of claim 1, wherein the at least one coolant apertures are in fluid communication with the coolant jacket and are configured and arranged to disperse a portion of the liquid coolant from the coolant jacket substantially towards the stator end turns.

4. The electric machine module of claim 1, wherein the at least one coolant apertures are configured and arranged to disperse a portion of the liquid coolant from the coolant jacket substantially into the machine cavity.

5. The electric machine module of claim 3, wherein the coolant jacket is configured and arranged to contain a pressurized liquid coolant.

6. The electric machine module of claim 3, wherein the coolant jacket and the at least one coolant apertures are configured and arranged disperse the liquid coolant substantially under gravity flow.

7. The electric machine module of claim 5, wherein the coolant jacket and the at least one coolant apertures are configured and arranged disperse pressurized liquid coolant.

8. The electric machine module of claim 1, comprising at least two end turn cavities wherein the at least one coolant apertures are configured and arranged to disperse a portion of the liquid coolant from the coolant jacket substantially into the at least two stator end turn cavities.

9. The electric machine module of claim 8, wherein the at least one coolant apertures are configured and arranged to disperse a portion of the liquid coolant from the coolant jacket substantially towards the stator end turns.

10. The electric machine module of claim 1, wherein the at least one end turn cavities are substantially sealed relative to the machine cavity; and wherein the at least one end turn cavities are configured and arranged so that any liquid coolant circulating through the at least one end turn cavities remains substantially in the end turn cavities; wherein optionally
at least some portion of the fluid can exit the end turn cavities and enter the machine cavity.

11. The electric machine module of claim 1, wherein the at least one stator end turn cavity substantially surrounds a stator end turn.

12. The electric machine module of claim 8, wherein one of the at least two end turn cavities substantially surrounds a stator end turn; or
wherein the at least two end turn cavities surround substantially similar proportions of a stator end turn; or
wherein the at least two end turn cavities surround substantially different proportions of a stator end turn.

13. The electric machine module of claim 1, wherein the at least one stator end turn cavity comprises at least three flanges.

14. The electric machine module of claim 13, wherein the at least three flanges are integrally formed as a substantially monolithic structure; or
wherein the at least three flanges are substantially non-electrically conductive; or
wherein the at least three flanges are coupled to at least one of the stator core, the end turns, and the housing.

15. A method for assembling an electric machine module comprising:
providing the electric machine including a rotor and a stator circumscribing the rotor, the stator a stator comprising a stator core including first axial end and a second axial end, and stator end turns;
providing a housing enclosing the electric machine within a machine cavity and including at least one end cap positioned axially adjacent to the electric machine;
providing a sleeve member disposed within the housing and generally circumscribing the electric machine and coupled to the at least one end cap;
providing a coolant jacket disposed within the sleeve member and configured and arranged to contain a liquid coolant, the sleeve member including at least one coolant apertures fluidly coupled with the coolant jacket and the at least one stator end turn cavity,
the at least one coolant apertures positioned substantially between an axial end of a stator and an axial end of an adjacent stator end turn; and
providing at least one stator end turn cavity at least partially surrounding a stator end turn; and
configuring the at least one coolant apertures to be in fluid communication with the coolant jacket and the at least one stator end turn cavity; and
configuring the at least one coolant apertures to disperse a portion of the liquid coolant from the coolant jacket substantially into the at least one stator end turn cavity.
